# EUROPEAN PATENT SPECIFICATION

(11) **EP 2 713 714 B1**
(45) Date of publication and mention of the grant of the patent: **08.07.2015**
(21) Application number: 12715351.8
(22) Date of filing: 10.04.2012
(51) Int. Cl.: A01L 7/10

(54) **NAIL FOR A HORSE SHOE**
NAGEL FÜR EIN PFERDEHUF
CLOU POUR UN FER À CHEVAL

(30) Priority: 26.05.2011 EP 11167717
(43) Date of publication of application: 09.04.2014
(73) Proprietor: Mustad Netherlands B.V., 9206 AZ Drachten (NL)
(72) Inventor: STELIN, Carlos, S-66010 Dals Långed (SE)
(74) Representative: Grootscholten, Johannes A.M.
(86) International application number: PCT/EP2012/056465
(87) International publication number: WO 2012/159816

(56) References cited:
- WO-A1-98/32331
- GB-A- 740 626
- GB-A- 190 828 309
- GB-A- 191 116 261
- IT-B- 1 176 359

## Description

The present invention relates to a nail for a horse shoe, comprising a shaft having a pointed end; a head at an end of the shaft opposite the pointed end, wherein the head is arranged via a neck on the shaft and comprises a convex element, and wherein the neck comprises a pitch, which defines an angle between the longitudinal axis through the head and a longitudinal axis through the shaft, and an assembly of said nail with a horse shoe and use of the nail.

Such horse shoe nails are commonly known, as for instance shown in figures 1 and 2 with a crown. Also known are horse shoe nails without a crown, for instance as shown in figures 3 and 4.

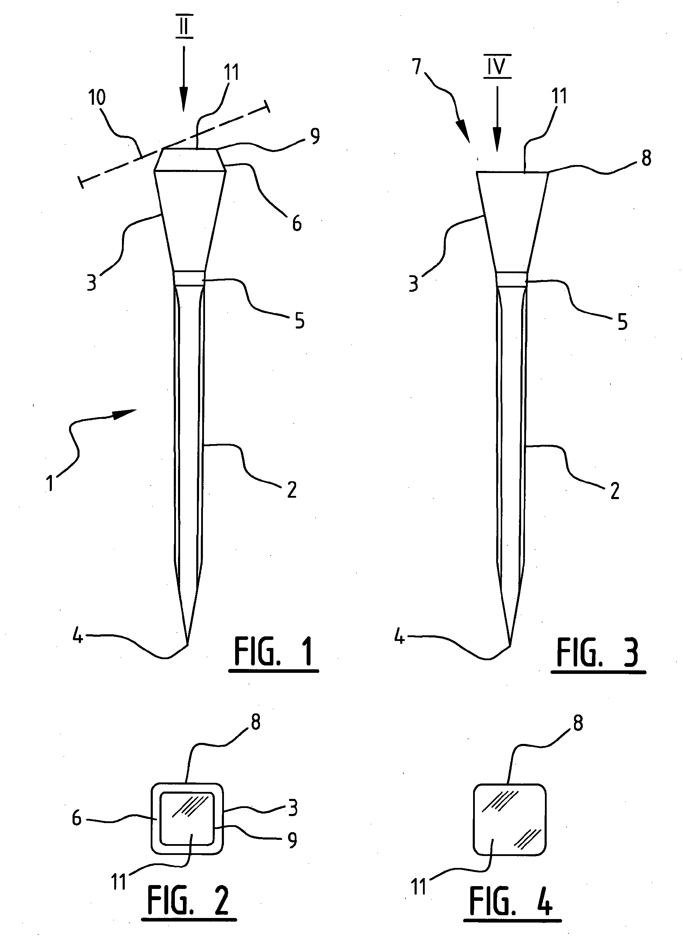

In figures 1 and 2, a nail 1 for a horse shoe comprises a shaft 2 with a head 3 at one end of the shaft 2 and with a point 4 at an opposite end of the shaft 2, wherein the head 3 is arranged via a neck 5 on the shaft 2. Further, the head 3 of the nail 1 comprises a crown 6. The prior art horse shoe nail 7 in figures 3 and 4 is missing the crown 6 of the nail in figures 1 and 2. The top of crown 6 or the top of the head 3 forms an impact (absorbing) surface for striking blows with (a schematically represented striking surface of) a hammer.

The known nails 1, 7 offer to a blacksmith an impact (absorbing) surface enclosed by an edge 8 of the head in the nail 7 of figures 3 and 4 and/or an edge 9 of the crown in the nail 1 according to figures 1 and 2.

A blacksmith normally wants to arrange a nail to secure a horse shoe obliquely outward in such a manner that the nail exits the hoof wall. This is the safest way to avoid injuring the horse; the blacksmith has to take particular care not to "quick" the horse, i.e. hammer a nail into the sensitive portion or structure of the hoof. To avoid injury to the horse with certainty, the objective is to drive the nail outward in the direction off the hoof wall. Notwithstanding this knowledge, accidents have happened, where a nail is struck into the sensitive structure of the hoof or at least not in a desired direction through the hoof (for example towards the radial outside of the hoof, i.e. the hoof wall).

In addition it is acknowledged here that horse shoe nails are known from GB-28309 and GB-16261, having a pitch and an arcuate curvature, where said curvature extends perpendicular to the two longitudinal directions of the head and the shaft that together define the pitch of the neck. These two longitudinal directions define the pitch angle and simultaneously also a plane, where the curvature of these disclosures is oriented through said plane. Thereby the problems encountered by hoof smiths is not remedied or decreased to any noteworthy extent.

The present invention is directed at decreasing, if not obviating, the above mentioned blacksmith's problems by providing an improved nail, that is distinguished over the prior art horse shoe nails by all features of the appended independent claim 1 in combination, including a defined orientation of the arcuate curvature of the convex element.

It has surprisingly been realised by the inventors of the present invention, that the prior art nails with or without a crown 6 on the head 3 exhibit sharp edges, in particular top edge 8 of the head 3 or top edge 9 of the crown 6. The top edge 9 defines/encompasses a smaller impact absorbing surface 11 than the - also relatively sharp - edge 8 of head 3 without a crown 6 as in figures 3 and 4. When striking the hammer on this edge 8 or 9, as shown schematically in figure 1, the likelihood of striking the nail at an angle - rather than head on - is larger for a smaller impact absorbing surface 11 of the nail, such as the top surface 11 of the crown 6 which top surface is encompassed by the edge 9, but both types of prior art nails and also those in GB-28903 and GB-16261 pose the blacksmith before the same basic problem of relatively sharp edges.
It is noted here that the technical field of horse shoeing can often be considered as quite traditional. However, as a novel and inventive feature to decrease, alleviate or even obviate the blacksmith's problems when shoeing a horse (or a donkey, mule of zebra or the like), the inventors have developed the nail having the convex impact surface defined by the convex element formed on or by or of the head 3 at least also in the orientation as defined in appended independent claim 1, i.e. in the plane defined by the longitudinal directions of the head and the shaft.

The sharp edge 8 of the head 3 in figures 3 and 4 and the sharp edge 9 of the crown 6 in figures 1 and 2 act to emphasize any misdirection of a blow with a hammer to a nail 1, precisely because the area of the impact absorbing surface relatively very small compared with that that of the head 3 as in figures 3 and 4. Especially in configurations where the head without the convex element defines a slanted surface relative to the longitudinal direction of the shaft, a blow with a hammer will be directed at an extended line shaped portion of top edge 8 or 9. This line-shaped portion will practically never be hit evenly over the line shaped portion by a hammer blow. These edges 8 and 9 are referred to as "sharp" in that the edge forms a relatively abrupt discontinuity - when moving over the head or crown of the nail - in relation to the size and shape of the striking surface of the hammer and/or to the area of the top of the head 3. In case of a slanted head 3 because of a pitch in the neck 5, especially, the edge 8 or 9 is not only sharp in an axial direction, but also elongate in a direction perpendicularly crossing the shaft, further complicating how to guide a proper blow to such a nail. Consequently, any less than perfectly placed blow with the hammer on edge 8 or 9 of nail 1 may result in a distinct and unwanted radial force component relative to the longitudinal direction of the nail 1, driving the nail sideways relative to the intended and desired direction, possibly driving the nail away from the envisaged direction, which envisaged driving direction is for instance towards the outside of the side surface of the hoof. Likewise the conventionally relatively sharp edge 8 can emphasize any misdirection of a blow with a hammer on the nail to advance the nail away from the desired direction. The convex element of the crown provides a smooth, evenly curved or arcuate shape of the impact surface of the nail, and thus a slightly imperfectly directed blow to the impact surface of the nail will not lead to a misdirection of the advance of the nail into the hoof, as was the case with the prior art nails 1, 7. Quite the opposite is the case: the novel and inventive horse shoe nail and more in particular the convex element in the defined and claimed orientation thereof results in an improvement in the direction in which the nail is driven into a hoof, practically regardless of the imprecision with which the nail is struck with the hammer.

Further to the inventive effect that the convex element centers the forces passed onto the nail when hammering, thereby improving the drivability of the nail, it is noted here that the convex element makes it easier for farriers to hit the nail. The nail can only be hit on the centre of the head, and more in particular of the convex element, and not on any sharp edges 8 or 9 or head angle anymore, since there are no angles, or at least less angles, and any angles remaining are less sharp. Thus, less of a choice needs to be made regarding where to hit the nail on the head; precision for hammering can be less, whilst securing a precisely positioned nail. This "centered drive" is combined with a slight "pitch" on the neck ensuring the nail naturally follows the slope of the hoof, which results in even better drivability of the horse shoe nail according to the present invention. Horse shoe nails having the pitch in combination with the convex element in the orientation according to the invention will then practically automatically exit of the hoof wall where they are intended to do so, aligned with other nails.

In addition it is noted here that the invention results in a more aesthetic nail and/or a more elegant final result. The horse shoe nail with a convex element makes the nail itself but also the shod horseshoe and/or the horse's foot look much more elegant than a classical nail would. This is a relevant attribute in disciplines where aesthetics are considered to be very relevant. Thus it is expected the novel horse shoe according to the present invention will also have a considerable attraction on farriers, who consider that work aesthetics shows work quality. The convex element of the horse shoe nail according to the invention contributes to prove the overall quality and to improve the final look of the shoeing job, and can be as such shown sold to farriers' customers.

Yet further, the novel horse shoe nail having the convex element provides increased safety for the horse, since there is no risk for a horse to injure itself with an acute nail head angle, in case the nail is protruding (too much) from the shoe nail crease. The convex element having a rounded shape will offer less resistance against the ground or pavement than classical heads. Again yet further, the horse shoe nail having the convex element exhibits an increased wear resistance. Therefore, nails according to the present invention are expected to exhibit improved wear relative to conventional other nails.

Preferred embodiments of the present invention, to which the present invention is by no means limited, are defined in dependent claims. For example the convex element of the crown viewed in any radial direction relative to the longitudinal direction of the shaft has any one or more forms from the group, comprising a smooth form, a smoothly varying form, a form that corresponds in shape with a part of a circumference of a circle which can be a sphere shaped or egg shaped convex element, etcetera.

Further, as an alternative or additional embodiment the head and the convex element of the crown of the nail viewed in axial direction relative to the longitudinal direction of the shaft define one or more shape from the group, at least comprising a rectangular circumferential shape. In such an embodiment, the head and the convex element may even define a square circumferential shape, an oval circumferential shape, a circular circumferential shape, etcetera.

As an alternative or in addition, the nail according to the invention may exhibit the feature that an outward oriented surface of the convex element forms an impact absorbing surface for a hammer having a striking surface, wherein the impact absorbing surface is at least one of smooth, et cetera in relation to the striking surface of the hammer.

The shape absorbing surface of the nail is most particularly such that the impact force is focussed or concentrated in the longitudinal direction of the nail. To this end, as an alternative or in addition, the nail according to the invention may exhibit the feature that an outward oriented surface of the convex element forms an impact absorbing surface for a hammer having a striking surface, wherein the impact absorbing surface has tangent lines and/or planes that, when moving over the impact absorbing surface, exhibit changes in direction that are at most small enough relative to a size and a shape of the striking surface of the hammer to direct a maximum of impact force when struck by the hammer in a longitudinal direction of the nail.

Further the present invention relates to an assembly of a horse shoe and at least one nail in accordance with the invention and/or a use of a nail according to the invention or of an assembly according to the invention. Such a method may entail arranging a horse shoe on a horse's hoof, comprising positioning the horse shoe against the hoof, and fixing the horse shoe to the hoof employing at least one nail and striking the at least one nail through the horse shoe into the hoof with a hammer.

The present invention will be further elucidated herein below on the basis of an exemplary embodiment as shown in the accompanying drawing, which is intended to only show an example of a nail according to the present invention without limitation to the specifically represented embodiment, since only the patent claims serve to limit the scope of protection, and wherein the same or similar reference number are used to identify the same or similar elements, components, functionalities, structures, et cetera, and in which:
Fig.'s 1 - 4 show schematic representations of nails 1, 7 according to the prior art; and
Fig.'s 5 - 10 show separate views of an embodiment of a nail according to the present invention from separate perspectives.

The prior art horse shoe nails of figures 1 - 4 have been described above.

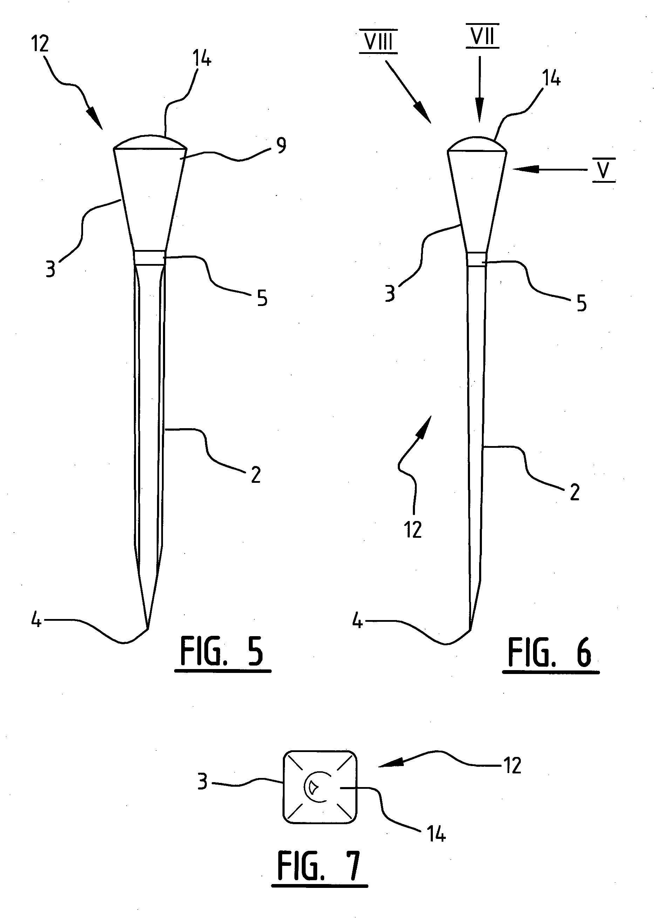

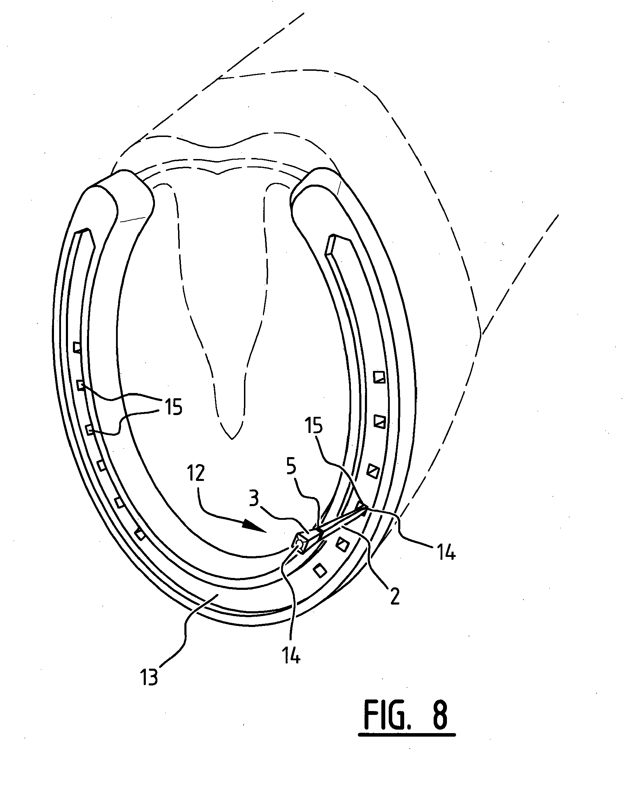

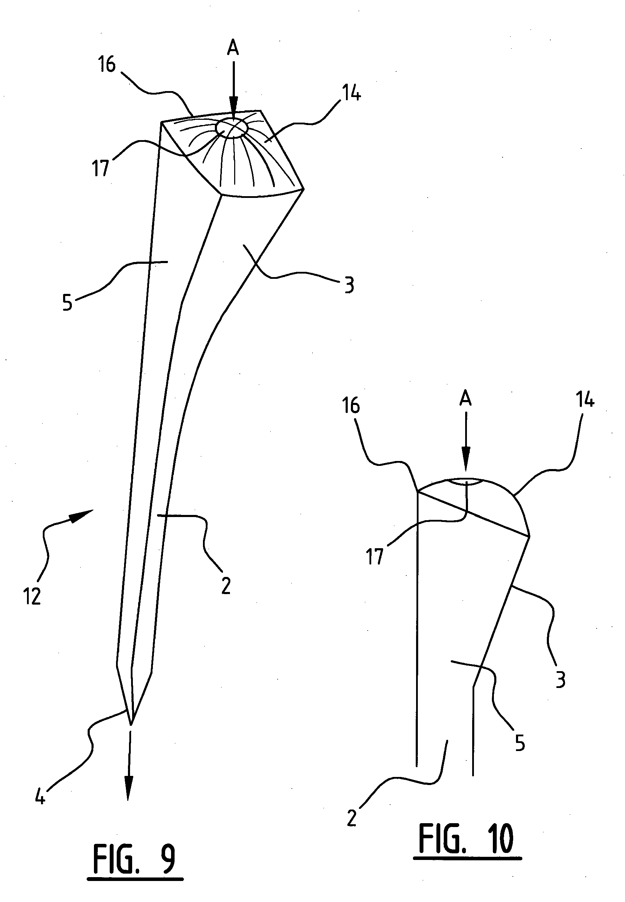

The horse shoe nail 12 according to the present invention as shown in figures 5 - 10 comprises in addition to the prior art nail 1, 7 of figures 1 - 4 a convex element 14. Figure 5 shows nail 12 in a frontal or rear view, figure 6 shows nail 12 in a view along arrow VI in figure 5, figure 7 shows a view along arrow VII in figure 6, figure 8 shows a perspective view of how such a novel and inventive horse shoe nail is to be driven into the horse's hoof through a hole in the horse shoe, figure 9 shows a perspective view of the nail along arrow IX in figure 6 and figure 10 shows enlarged relative to figure 6 the relationship between the pitch α of the head on or in the neck relative to the shaft.

The nail 12 of figure 5 - 10 is intended to be used for fixing a horse shoe 13 to a hoof of a horse (or mule, donkey or a zebra, and the like, even), where an assembly with a part of a horse shoe 13 is as shown in figure 8. Figure 8 shows a perspective view of a nail 12 according to the invention. For assembling the horse shoe 13 and the horse shoe nail 12 on the hoof of a horse, the nail 12 is driven through a hole 15 in the horse shoe 13 using a hammer, like the one schematically indicated with line 10 in figure 1. A part of the horse shoe 13 is schematically shown in the view of figure 8, and the nail 12 according to the invention is driven through the horse shoe 13 and into the hoof of the horse using the hammer.

The convex element 14 has an arcuate form, without any too abrupt discontinuities like the relatively sharp edge 9 of the crown 6 of the nail 1 in figures 1 and 2. The convex element 14 is smooth and arcuate in that thereby force of a blow with the hammer on the nail 12 is maximally focussed or directed in the longitudinal direction of the nail 12. The curvature of the convex element 14 is shown in the side view of figure 6, from which it is clear that the curvature of convex element 14 extends at least also in the direction of a plane defined by both longitudinal axes of the head 3 and the shaft 2. In other words: this curvature extends in a plane in which also both mentioned longitudinal axes lie. The prior art curvatures were only in a direction perpendicular to said plane. It is self evident that thereby the radial component of a strike force resulting from an imperfectly placed blow with a hammer will reduce relative to a prior art nail having a crown 6 as in figures 1 and 2 with the relatively sharp edge 9 surrounding a relatively small impact absorbing area, and also a sharp top edge 8 of a head 3 without a crown 6.

The convex element 14 of the nail, when viewed in radial direction relative to the longitudinal direction of the shaft, could have, as an alternative or in addition to the arcuate form according to figures 5 - 10, any one or more forms from the group, comprising a smooth form, a smoothly varying form, a form that corresponds in shape with a part of a circumference of a circle, a bulge, a sphere or an egg, etcetera.

Figure 7 shows a top view along arrow VII in figure 6 of the head 3 and convex element 14 of a nail 12 according to the present invention as having an approximately square shape. Further, as an alternative or additional embodiment the head 3 and the convex element 14 of the nail 12 viewed in head-on axial direction relative to the longitudinal direction of the shaft can define one or more shape from the group, at least comprising a rectangular circumferential shape. In alternative embodiments, the head 3 and the convex element 14 may even define an oval circumferential shape, a circular circumferential shape, et cetera.

As an alternative or in addition, the nail 12 according to the invention may exhibit the feature that an outward or rather upward oriented (impact absorbing) surface of the convex element 14 forms an impact absorbing surface for a hammer having a striking surface, wherein the impact absorbing surface is at least one of smooth, et cetera in relation to the striking surface of the hammer. Thereby the radial component of a driving force on the nail 12 resulting from a blow with the hammer will be reduced, relative to the sharp form of the edge 9 of crown 6 in figures 1 and 2 or the edge 8 of the crownless head 3 in figures 3 and 4.

Consequently, the shape of the impact absorbing surface of the convex element 14 of the nail 12 is most particularly and preferably such, that the impact force is maximally focussed or concentrated in the longitudinal direction of the nail 12. To this end, as an alternative or in addition, the nail 12 according to the invention can exhibit the feature that an outward or rather upward oriented (impact absorbing) surface of the convex element 14 forms an impact absorbing surface for a hammer having a striking surface, wherein the impact absorbing surface defined by the convex element 14 has tangent lines and/or planes that, when moving over the impact absorbing surface, exhibit changes in direction that are at most small enough relative to a size and a shape of the striking surface of the hammer, to direct a maximum of impact force when struck by the hammer in essentially (but perhaps not entirely) a longitudinal direction of the nail 12.

It is in particular pointed out here that the present invention has for an effect that with the pitch on the neck 5 a head 3 or crown will have an extended top edge 16 forming part of the edge 8 or 9 running all round the head or crown as shown in figures 9 and 10. Without the convex element, a slanted face of the head under an angle relative to the length of the shaft is enclosed by edge 8 or 9. In the prior art this elongate top edge 16 part of edge 8 or 9 is extended to offer a line shaped target as the only real striking target for a blow with a hammer, which is hard to hit straight as it extends across the blow direction. As a consequence of the invention, the striking target has moved from the line shaped top edge 16 as in the prior art to the circular zone 17 in figures 9 and 10 on the convex element 14, thereby facilitating hammering the nail into the horse's hoof..

In the prior art documents GB-28309 and GB-16261, referred to above, an arcuate shape of this edge 16 is disclosed, which does not improve the ease with which the head 3 of the nail can be struck using a hammer as is achieved by the orientation of the arcuate convex element according to the present invention.

Further the present invention relates to an assembly of a horse shoe 13 and at least one nail 12 as shown in figure 8 and in accordance with the invention and/or a use of a nail 12 according to the invention or of an assembly 12, 13 according to the invention. Such a method may entail arranging a horse shoe 13 on a horse's hoof, comprising positioning the horse shoe 13 against the hoof, and fixing the horse shoe 13 to the hoof employing at least one nail 12 according to the present invention and striking the at least one nail 12 through (a hole 15 of) the horse shoe 13 into the hoof with a hammer.

Needless to say, the present invention naturally also relates to horse shoe nails, assemblies of such nails and use of the nails and/or assemblies in relation to other animals, such as donkeys, mules, zebra's and the like.

The invention is by no means limited to the shown and specifically described embodiments, but is only bound by the limitations from the independent of the appended claims. For instance the rounded convex element is combined with a "pitch" on the neck ensuring the nail naturally follows the slope of the hoof, which results in even better drivability for a nail according to the invention. Such a pitch defines an angle between the longitudinal axis through the head and a longitudinal axis through the shaft.

## Claims

1. A nail for a horse shoe, comprising:
- a shaft (2) having a pointed end (4);
- a head (3) at an end of the shaft (2) opposite the pointed end (4),
wherein the head (3) is arranged via a neck (5) on the shaft (2) and comprises a convex element (14),
and wherein the neck (5) comprises a pitch, which defines an angle between a longitudinal axis through the head (3) and a longitudinal axis through the shaft (2),
**CHARACTERISED IN THAT**
the convex element (14), viewed in every radial direction relative to any of the longitudinal directions of the head (3) and of the shaft (2), has an arcuate form.

2. The nail of claim 1, wherein the longitudinal directions of the head (3) and of the shaft (2) together define a plane in which at least a curvature of the convex element (14) extends.

3. The nail of claim 1 or 2, wherein the convex element (14) viewed in radial direction relative to the longitudinal direction of the shaft (2) or head has a smooth form.

4. The nail of any one of the preceding claims, wherein the convex element (14) viewed in radial direction relative to the longitudinal direction of the shaft or head corresponds in shape with a part of a circumference of a circle.

5. The nail of any one of the preceding claims, wherein the head (3) and the convex element (14) viewed in axial direction relative to the longitudinal direction of the shaft (2) or head (3) define a rectangular circumferential shape.

6. The nail of claim 5, wherein the head (3) and the convex element (14) define a square circumferential shape.

7. The nail of any one of the preceding claims, wherein an outward oriented surface of the convex element (14) forms an impact absorbing surface for a hammer having a striking surface, wherein the impact absorbing surface is smooth in relation to the striking surface of the hammer.

8. The nail of any one of the preceding claims, wherein an outward oriented surface of the convex element (14) forms an impact absorbing surface for a hammer having a striking surface, wherein the impact absorbing surface has tangent lines and/or planes that, when moving over the impact absorbing surface, exhibit changes in direction that are at most small enough relative to a size and a shape of the striking surface of the hammer to direct a maximum of impact force when struck by the hammer in a longitudinal direction of the shaft (2).

9. The nail according to any one of the preceding claims, wherein the head (3) without the convex element (14) defines a slanted surface relative to the longitudinal direction of the shaft (2).

10. An assembly of a horse shoe (13) and at least one nail (12) in accordance with at least one of the preceding claims.

11. Use of a nail (12) according to any one of the preceding claims 1 - 9 or of an assembly according to claim 10, for arranging a horse shoe (13) on a horse's hoof, comprising positioning the horse shoe (13) against the hoof, and fixing the horse shoe (13) to the hoof employing at least one nail (12) and striking the at least one nail (12) through the horse shoe (13) into the hoof with a hammer.

## Patentansprüche

1. Nagel für ein Hufeisen mit:
- einem Schaft (2) mit einem zugespitzten Ende (4),
- einem Kopf (3) an einem Ende des Schaftes (2), das dem zugespitzten Ende (4) gegenüber liegt,
wobei der Kopf (3) über einen Hals (5) auf dem Schaft (2) angeordnet ist und ein konvexes Element (14) aufweist,
und wobei der Hals (5) eine Neigung aufweist, die einen Winkel zwischen einer Längsachse durch den Kopf (3) und einer Längsachse durch den Schaft (2) definiert,
**dadurch gekennzeichnet, dass**
das konvexe Element (14), gesehen von jeder Radialrichtung relativ zu jeder der Längsrichtungen des Kopfes (3) und des Schaftes (2), eine gebogene Form aufweist.

2. Nagel nach Anspruch 1, wobei die Längsrichtungen des Kopfes (3) und des Schaftes (2) eine Ebene definieren, in der sich zumindest eine Krümmung des konvexen Elementes (14) erstreckt.

3. Nagel nach Anspruch 1 oder 2, wobei das konvexe Element (14), gesehen in der Radialrichtung relativ zu der Längsrichtung des Schaftes (2) oder des Kopfes, eine glatte Form aufweist.

4. Nagel nach einem der vorstehenden Ansprüche, wobei das konvexe Element (14), gesehen in der Radialrichtung relativ zu der Längsrichtung des Schaftes oder des Kopfes, in der Form mit einem Teil eines Umfangs eines Kreises übereinstimmt.

5. Nagel nach einem der vorstehenden Ansprüche, wobei der Kopf (3) und das konvexe Element (14), gesehen in axialer Richtung relativ zu der Längsrichtung des Schaftes (2) oder des Kopfes (3) eine rechteckige Umfangsform definiert.

6. Nagel nach Anspruch 5, wobei der Kopf (3) und das konvexe Element (14) eine quadratische Umfangsform definieren.

7. Nagel nach einem der vorstehenden Ansprüche, wobei eine nach außen orientierte Oberfläche des konvexen Elementes (14) eine Stoß absorbieren Oberfläche für einen Hammer mit einer Schlagfläche bildet, wobei die Stoß absorbierende Oberfläche in Bezug auf die Schlagfläche des Hammers glatt ist.

8. Nagel nach einem der vorstehenden Ansprüche, wobei eine nach außen orientierte Fläche des konvexen Elementes (14) eine Stoß absorbierende Oberfläche für einen Hammer mit einer Schlagfläche bildet, wobei die Stoß absorbierende Oberfläche Tangentenlinien und/oder Ebenen aufweist, die, bei einer Bewegung über die Stoß absorbierende Oberfläche, Änderungen in der Richtung zeigen, die mindestens klein genug in Bezug auf die Größe und die Form der Schlagfläche des Hammers sind, um ein Maximum der Auftreffkraft, wenn sie durch den Hammer getroffen werden, in eine Längsrichtung des Schaftes (2) zu richten.

9. Nagel nach einem der vorstehenden Ansprüche, wobei der Kopf (3) ohne das konvexe Element (14) eine abgeschrägte Oberfläche relativ zu der der Längsrichtung des Schaftes (2) definiert.

10. Anordnung eines Hufeisens (13) und zumindest eines Nagels (12) in Übereinstimmung mit zumindest einem der vorstehenden Ansprüche.

11. Verwendung eines Nagels (12) nach einem der vorstehenden Ansprüche 1 bis 9 oder einer Anordnung nach Anspruch 10 zum Anbringen eines Hufeisens (13) an einem Pferdehuf mit dem Positionieren des Hufeisens (13) gegen den Huf und Fixieren des Hufeisens (13) an dem Huf unter Verwendung zumindest eines Nagels (12) und Einschlagen des zumindest einen Nagels (12) durch das Hufeisen (13) mit einem Hammer in den Huf.

## Revendications

1. Clou de fer à cheval, comprenant :
- une tige (2) qui présente une extrémité pointue (4) ;
- une tête (3) située au niveau d'une extrémité de la tige (2) opposée à l'extrémité pointue (4) ;
dans lequel la tête (3) est agencée par l'intermédiaire d'un collet (5) sur la tige (2) et comprend un élément convexe (14);
et dans lequel le collet (5) comprend une inclinaison, qui définit un angle entre un axe longitudinal qui passe par la tête (3) et un axe longitudinal qui passe par la tige (2) ;
**caractérisé en ce que** :
l'élément convexe (14), quand on regarde dans n'importe quelle direction radiale par rapport à n'importe laquelle des directions longitudinales de la tête (3) et de la tige (2), présente une forme arquée.

2. Clou selon la revendication 1, dans lequel les directions longitudinales de la tête (3) et de la tige (2) définissent ensemble un plan dans lequel s'étend une courbure au moins de l'élément convexe (14).

3. Clou selon la revendication 1 ou la revendication 2, dans lequel l'élément convexe (14), quand on regarde dans une direction radiale par rapport à la direction longitudinale de la tige (2) ou de la tête, présente une forme lisse.

4. Clou selon l'une quelconque des revendications précédentes, dans lequel l'élément convexe (14), quand on regarde dans une direction radiale par rapport à la direction longitudinale de la tige ou de la tête, présente une forme qui correspond à une partie d'une circonférence d'un cercle.

5. Clou selon l'une quelconque des revendications précédentes, dans lequel la tête (3) et l'élément convexe (14), quand on regarde dans une direction axiale par rapport à la direction longitudinale de la tige (2) ou de la tête (3), définissent une forme circonférentielle rectangulaire.

6. Clou selon la revendication 5, dans lequel la tête (3) et l'élément convexe (14) définissent une forme circonférentielle carrée.

7. Clou selon l'une quelconque des revendications précédentes, dans lequel une surface orientée vers l'extérieur de l'élément de corps convexe (14), forme une surface d'absorption d'impact d'un marteau qui présente une surface de frappe, dans lequel la surface d'absorption d'impact est lisse par rapport à la surface de frappe du marteau.

8. Clou selon l'une quelconque des revendications précédentes, dans lequel une surface orientée vers l'extérieur de l'élément de corps convexe (14) forme une surface d'absorption d'impact d'un marteau qui présente une surface de frappe, dans lequel la surface d'absorption d'impact présente des lignes et/ou des plans tangents qui, quand on se déplace sur la surface d'absorption d'impact, présentent des modifications de direction qui sont tout au plus assez petites par rapport à la taille et à la forme de la surface de frappe du marteau de façon à diriger dans la direction longitudinale de la tige (2) la plus grande partie de la force d'impact lors de la frappe du marteau.

9. Clou selon l'une quelconque des revendications précédentes, dans lequel la tête (3), sans élément convexe (14), définit une surface inclinée par rapport à la direction longitudinale de la tige (2).

10. Ensemble de fer à cheval (13) et au moins un clou (12) selon l'une au moins des revendications précédentes.

11. Utilisation d'un clou (12) selon l'une quelconque des revendications précédentes 1 à 9 ou d'un ensemble selon la revendication 10, destiné à agencer un fer à cheval (13) sur le sabot d'un cheval, comprenant les étapes consistant à positionner le fer à cheval (13) contre le sabot, et à fixer le fer à cheval (13) sur le sabot en utilisant au moins un clou (12) et en frappant sur le ou les clous (12) dans le sabot à travers le fer à cheval (13) à l'aide d'un marteau.
